# EUROPÄISCHE PATENTSCHRIFT

(11) **EP 1 053 515 B1**
(45) Veröffentlichungstag und Bekanntmachung des Hinweises auf die Patenterteilung: **24.07.2002**
(21) Anmeldenummer: 99924779.4
(22) Anmeldetag: 07.04.1999
(51) Int. Cl.: G05B 19/42

(54) **VERFAHREN ZUM POSITIONIEREN EINES TEILS**
METHOD FOR POSITIONING A PART
PROCEDE DE POSITIONNEMENT D'UNE PIECE

(30) Priorität: 24.08.1998 DE 19838293
(43) Veröffentlichungstag der Anmeldung: 22.11.2000
(73) Patentinhaber: ROBERT BOSCH GMBH, 70442 Stuttgart (DE)
(72) Erfinder: LAMM, Hubert, D-77876 Kappelrodeck (DE); HADERER, Günter, D-77815 Bühl (DE)
(86) Internationale Anmeldenummer: DE9901030
(87) Internationale Veröffentlichungsnummer: WO0011529

(56) Entgegenhaltungen:
- EP-A- 0 302 461
- DE-A- 19 527 456

## Beschreibung

### Stand der Technik

Die Erfindung geht aus von einem Verfahren zum Positionieren eines Teils nach dem Oberbegriff des Hauptanspruchs.

Es sind Antriebssysteme zum Positionieren eines Teils aus der DE-OS 195 27 456 bekannt, wobei das Teil mittels eines Antriebes zwischen zwei Endpositionen hin- und herbewegbar ist und beim Erreichen der Endpositionen ein Steuersignal für den Antrieb generiert wird, das den Antrieb stoppt oder dessen Antriebsrichtung reversiert. Bei dem erstmaligen Erreichen wenigstens einer der Endpositionen wird die Stellung des Antriebs erfaßt und gespeichert und beim nächsten Annähern des Teils an diese Endposition wird der Antrieb vor Erreichen der Endposition gestoppt oder dessen Antriebsrichtung reversiert. Dadurch wird das zu positionierende Teil bereits rechtzeitig angehalten, so daß ein mechanischer Anschlag mit diesem Endanschlag unterbleibt. Hierdurch wird die mechanische Belastung des gesamten Systems, insbesondere des Antriebsmotors, verringert. Weiterhin wird nach einer wählbaren fest vorgegebenen Zahl von Annäherungsintervallen an die Endposition das Teil nicht mehr vor Erreichen der Endposition angehalten, sondern das zu positionierende Teil zwecks Nachjustierung des gesamten Antriebssystems gegen die Endposition gefahren. Hierbei erfolgt eine Nachnormierung in regelmäßigen Abständen und somit erkennbar durch den Benutzer (Fahrer).

### Vorteile der Erfindung

Gemäß dem erfindungsgemäßen Verfahren mit den kennzeichnenden Merkmalen des Hauptanspruchs wird die Anzahl von Annäherungen an eine oder beide der Endpositionen bis zu einem weiteren Nachjustieren des Antriebssystems durch eine von einer Steuereinheit erzeugten Zufallszahl vorgegeben.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist, daß lediglich Zufallszahlen verwendet werden, die innerhalb festgelegter minimaler und maximaler Grenzwerte liegen. Die Grenzwerte gewährleisten eine Nachjustierung bzw. Nachnormierung des Systems in sinnvollen zeitlichen Abständen. Die Abstände sind von dem Fahrzeughersteller vorzugsweise experimentell zu bestimmen, so daß Veränderungen des Systems, wie z.B. durch Temperatur bedingte Reibungsänderungen, Materialalterungserscheinungen, akkumulierte Ungenauigkeiten der Positionserfassung und weitere während des Betriebs des Antriebssystems auftretende Abweichungen, durch Nachnormierung ausgeglichen werden können.

Ein derartiges Verfahren ist besonders geeignet für Schiebedach-, Schiebehebedach-, Fensterheberantriebe sowie Sitzverstellsysteme oder dergleichen in einem Kraftfahrzeug. Hierbei liegen jeweils eine oder zwei Endpositionen vor, die gemäß dem erfindungsgemäßen Verfahren lediglich zur Nachnormierung des Systems angefahren werden.

Vorzugsweise wird eine dieser Endpositionen zur Nachnormierung des Systems festgelegt. Diese Endposition wird beim erstmaligen Annähern angefahren, sowie bei jeder Nachnormierung nach Ablauf der durch die Zufallszahl vorgegebenen Annäherungszyklen. Beispielsweise ist bei einem Schiebehebedach die Hebelage als anfahrbare Endposition geeignet, da üblicherweise eine anfahrbare Endposition in der Schiebelage nicht vorliegt.

Denkbar ist weiterhin das alternierende automatische Anfahren beider Endpositionen zum Zwecke der Nachjustierung des Systems.

Vorteilhaft ist weiterhin, daß die Zufallszahl durch die Steuereinheit generiert wird und bei jeder Annäherung des zu positionierenden Teils an diese Endposition dekrementiert wird.

### Zeichnung

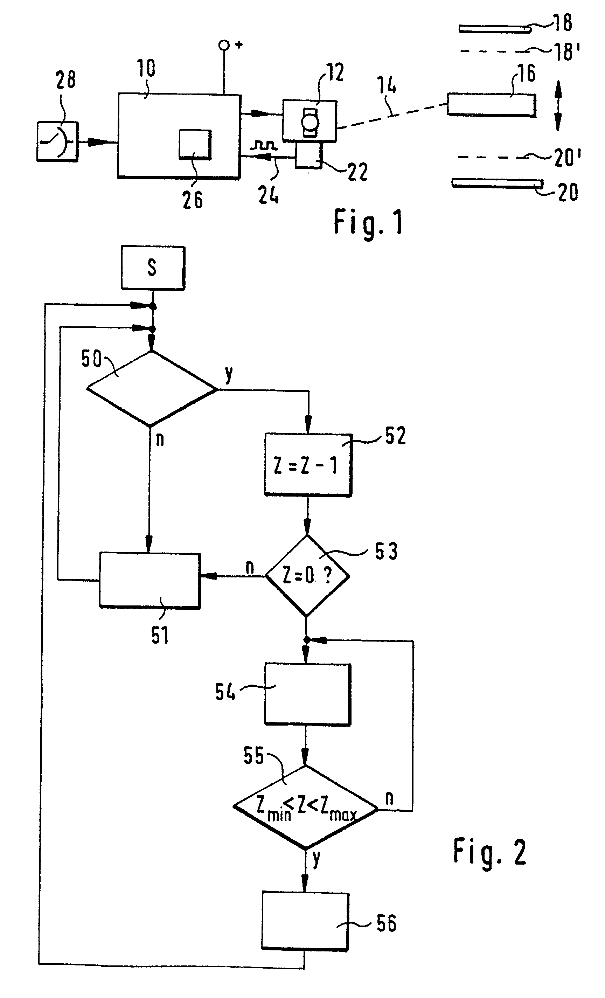

Ein Ausführungsbeispiel der Erfindung ist in der Zeichnung dargestellt und in der nachfolgenden Beschreibung näher erläutert. Es zeigen Figur 1 eine schematische Anordnung zur Durchführung des erfindungsgemäßen Verfahrens und Figur 2 ein Ablaufdiagramm zur Beschreibung des erfindungsgemäßen Verfahrens.

### Beschreibung des Ausführungsbeispieles

In der Figur 1 ist schematisch ein Antriebssystem zum Positionieren eines Teils dargestellt. Das Antriebssystem weist eine zur Stromversorgung an Pluspotential liegende Steuereinheit 10 für einen reversierbaren Elektromotor 12 auf, der über ein gestrichelt angedeutetes Getriebe 14 mit einem zu positionierenden Teil 16 verbunden ist. Das zu positionierende Teil 16 wird durch den reversierbaren Motor 12 in zwei Richtungen gemäß dem Doppelpfeil bis zu Endanschlägen in Endpositionen 18, 20 bewegt. Vor den Endpositionen 18, 20 liegen in einem kurzen Abstand zu diesen die Stoppositionen 18', 20', bei denen das Teil 16 durch die Steuereinheit 10 gestoppt wird. Die Stoppositionen 18', 20' sind derart gewählt, daß das in diesen Stoppositionen 18', 20' durch den Motor 12 gestoppte Teil 16 aufgrund seiner Massenträgheit nicht die Endpositionen 18, 20 erreicht bzw. diese gerade noch erreicht. Der Impuls des Teils 16 auf den Endanschlag in der Endposition 18, 20 unterbleibt somit. Gleichzeitig ist eine vollständiges Öffnen bzw. Schließen des Teiles 16 gewährleistet.

An den Motor 12, vorzugsweise an dessen Abtriebswelle, ist ein Positionssensor 22 angeordnet, dessen impulsförmigen Positionssignale 24 bei drehender Welle der Steuereinheit 10 zur Auswertung der Position, Bewegungsrichtung und/oder der Geschwindigkeit des Teils 16 zugeführt werden. Ein Positionszähler 26 in der Steuereinheit 10 zählt dabei die Positionssignale 24 je nach Bewegungsrichtung des Teils 16 auf- oder abwärts. Jedem Wert des Zählers ist somit eine bestimmte Position des Teils 16 zugeordnet.

Ferner ist ein durch den Benutzer zu betätigendes Bedienelement 28 an einem weiteren Eingang der Steuereinheit 10 angeschlossen. Über das Bedienelement 28 gibt der Benutzer die gewünschte Position bzw. die gewünschte Verstellbewegung des Teils 16 vor.

Im folgenden wird davon ausgegangen, daß es sich bei diesem Antriebssystem um ein Schiebehebedachantrieb handelt. Dabei wird der Schiebedachdeckel 16 als zu positionierendes Teil zwischen dem Festanschlag der Endposition 18 in seiner geöffneten Hebelage und der Endposition 20 in seiner geöffneten Schiebelage, von der Steuereinheit 10 angesteuert und durch den Motor 12 angetrieben, hin- und herbewegt. Schiebehebedachantriebe weisen üblicherweise keinen Festanschlag 20 in der geöffneten Schiebelage auf, so daß der Schiebedachdeckel 16 nicht bis zur der Endposition 20 gefahren werden kann. Deswegen eignet sich lediglich der Festanschlag der Hebelage als anzufahrende Endposition 18.

Die Stopposition 18' vor der Hebelage als Endposition 18 ist lediglich ein paar Winkelgrade von dem Festanschlag entfernt. Dies entspricht einem Verstellweg der obersten Kante des geöffneten Schiebehebedachdeckels von ca. 0,5 bis 1 cm. Ob nun der Schiebehebedachdeckel 16 in der Stopposition 18' oder am Festanschlag der Endposition 18 der Hebelage gestoppt und/oder reversiert wird, ist für den Benutzer kaum ersichtlich.

Als Positionssensor 22 wird ein Hallsensorsystem verwendet. Ringmagneten unterschiedlicher Polarität umfassen die Abtriebswelle des Motors 12 und wirken mit einem Halldetektor zusammen. Durch die Rotation der Abtriebswelle des Motors 12 liegen am Halldetektor Polaritätswechsel vor, die zu impulsförmigen Positionssignalen 24 führen und somit die Verstellbewegung des Schiebedachdeckels 16 wiedergeben.

Das in der Steuereinheit 10 abgelegte erfindungsgemäße Verfahren wird im folgenden anhand Figur 2 beschrieben. Beim ersten Start S wird eine sogenannte Zwangsnormierung des Antriebssystems durchgeführt, da bei einer dem Einschalten der Stromversorgung der Steuereinheit 10 (Power on) vorausgegangenen Ausschaltung (Power down) der Zähler 26 abgeschaltet wird und somit die aktuelle Position des Schiebedachdeckels 16 in der Steuereinheit 10 nicht mehr gespeichert ist. Der Start wird somit bei einer Unterbrechung der Stromversorgung, beispielsweise durch Abklemmen der Fahrzeugbatterie, durchgeführt.

Beim Start S führt die Normierung folglich zu einem Öffnen des Schiebedachdeckels in den Festanschlag 18 der Hebelage, wobei dann der Zähler 26 auf Null gesetzt wird. In dem anschließenden Schritt 50 wird der Zustand der Hebelage des Bedienelementes 28 ausgelesen. Ist der Verstellbefehl nicht in Hebelage des Schiebedaches gewählt (50), dann wird bei 51 der normale Verstellvorgang gemäß der Vorgabe durch das Bedienelement 28 ausgeführt. Wurde von dem Benutzer der Verstellbefehl Hebelage des Schiebehebedaches gewählt, wird dies von der Steuereinheit 10 erfaßt und als Annäherung des Deckels 16 an die Endposition 18 gewertet. Gemäß dem mit "y" markierten Pfeil gelangt man zu dem folgenden Schritt 52, in dem eine durch die Steuereinheit 10 vorab generierte Zufallszahl Z durch die Steuereinheit 10 um Eins dekrementiert wird.

Im Schritt 53 wird anschließend durch die Steuereinheit 10 der Wert der zuvor dekrementierten Zufallszahl Z geprüft. Weist die Zufallszahl Z einen Wert ungleich Null auf (n), wird der normale Verstellvorgang gemäß der Vorgabe des Benutzers mittels des Bedienelementes 28 durchgeführt (51), wonach die Verstellbewegung des Deckels 16 in der Stopposition 18' gestoppt wird, so daß der Deckel die Endposition 18 nicht erreicht. Das Verfahren beginnt anschließend von Neuem.

Anderenfalls, wenn die Zufallszahl Z den Wert Null annimmt, erzeugt die Steuereinheit 10 in Schritt 54 eine neue Zufallszahl Z. Diese wird in Schritt 55 mit in der Steuereinheit 10 abgelegten Grenzwerten Zmin und Zmax überprüft. Der Grenzwert Zmin liegt beispielsweise bei einer Anzahl von Annäherungen von 40 bis 50, der Grenzwert Zmax bei 200 Annäherungszyklen. Die Grenzwerte Zmin und Zmax werden von dem Fahrzeughersteller experimentell bestimmt und festgelegt. Liegt die in Schritt 54 erzeugte Zufallszahl Z nicht innerhalb der vorgegebenen Grenzwerte (n) wird wiederum eine neue Zufallszahl Z generiert. Andernfalls (y) wird bei 56 ein Verstellvorgang des Schiebedachdeckels 16 in die Hebelage 18 mit automatischer Nachnormierung durchgeführt. Bei der Nachnormierung wird der Positionszähler 26 auf einen vorgegebenen Wert, vorzugsweise Null, zurückgesetzt.

Bei der Normierung und Nachnormierung wird die Endposition 18 erkannt, wenn der Schiebedachdeckel 16 den mechanischen Festanschlag 18 erreicht hat und somit der Positionssensor 22 aufgrund eines blockierten Motors 12 keine Positionssignale 24 mehr generiert. Die Steuereinheit 10 erfaßt, daß der Motor 12 weiterhin angesteuert wird und die Positionssignale für eine bestimmte, vorgegebene Zeit ausbleiben, und führt daraufhin ein Rücksetzen des Zählers 26 durch.

Bei dem Verstellen des Deckels 16 aus seiner Hebelage 18 in Richtung der geschlossenen Lage bzw. der Schiebelage generiert der Positionssensor 22 Impulse 24, die den Zähler 26 beispielsweise inkrementieren und bei einer umgekehrten Bewegungsrichtung dekrementieren. Dadurch ist jeder Position des Schiebedachdeckels 16 ein Zählwert im Zähler 26 zugeordnet. Die Stopposition 20' wird ebenfalls in Abhängigkeit eines Zählerwertes festgelegt.

Bei einer Normierung wird mit dem Schiebedachantrieb der Endanschlag 18 definiert, wobei der Endanschlag 20 beispielsweise als Zahlenwert des Zählers 26 in der Steuereinheit gespeichert ist.

Beispielsweise bei einem Fensterheberantrieb werden die Endanschläge 18 und/oder 20, insbesondere alternierend, festgelegt, wobei bei dem einen Endanschlag der Zähler 26 auf einen festen Wert zurückgesetzt und bei dem anderen Endanschlag der Zählerwert gespeichert wird. Die Definition der Endanschläge erfolgt somit über den Wert des Zählers 26 und somit in bezug auf die Anzahl der Umdrehungen des Elektromotors 12. Der Abstand der Stoppositionen 18', 20' vor den Endpositionen 18, 20 kann beliebig gewählt werden, beispielsweise zwei Umdrehungen der Abtriebswelle des Motors 12, oder aber während des Verstellvorgangs des zu positionierenden Teils 16 aus Parametern wie z.B. der Verstellgeschwindigkeit und/oder der Motorspannung bzw. des Motorstromes berechnet werden.

Insgesamt ist somit ein Antriebssystem geschaffen, daß ein schonendes Hin- und Herbewegen des Teils 16 zwischen seinen Endanschlägen gestattet. Somit wird der Verschleiß des Antriebssystems verringert und die Gesamtlebensdauer erhöht. Insbesondere kann eine variable durch eine Zufallszahl vorgegebene Zyklenanzahl, mit der das Teil 16 gegen seine Endanschläge 18 bzw. 20 verfahren werden kann, erreicht werden.

## Patentansprüche

1. Verfahren zum Positionieren eines Teils (16), das mittels eines Antriebes (12) zwischen zwei Endpositionen (18, 20) hin- und herbewegbar ist und wobei für eine vorgegebene Anzahl (Z) von Annäherungen an eine der Endpositionen (18, 20) der Antrieb (12) vor dem Erreichen dieser Endposition (18, 20) gestoppt und gegebenenfalls dessen Drehrichtung geändert wird und bei einer anschließenden Annäherung an die Endposition (18, 20) diese zwecks Normierung erreicht, erfaßt und gespeichert wird, **dadurch gekennzeichnet, daß** die vorgegebene Anzahl in einer Steuereinheit (10) als Zufallszahl (Z) generiert wird.

2. Verfahren nach Anspruch 1, **dadurch gekennzeichnet, daß** lediglich Zufallszahlen (Z) innerhalb vorgegebener Grenzwerte (Zmin, Zmax) ausgewählt werden.

3. Verfahren nach Anspruch 1, **dadurch gekennzeichnet, daß** bei einer erstmaligen Annäherung an diese Endposition (18, 20) das Teil (16) für eine Normierung in die Endposition (18, 20) gefahren wird.

4. Verfahren nach Anspruch 1, **dadurch gekennzeichnet, daß** die durch die Steuereinheit (10) generierte Zufallszahl (Z) bei jeder Annäherung des Teils (16) an die Endposition (18, 20) bzw. Stopposition (18', 20') dekrementiert wird.

5. Verfahren nach Anspruch 4, **dadurch gekennzeichnet, daß** beim Erreichen der Zufallszahl Null eine Normierung des Teils (16) durch Anfahren seiner Endposition (18, 20) durchgeführt wird.

6. Verfahren nach Anspruch 1, **dadurch gekennzeichnet, daß** bei einer Normierung ein Positionszähler (26) zur Erfassung der Position des Teiles (16) auf einen vorgegebenen Wert, beispielsweise Null, gesetzt wird.

7. Verfahren nach Anspruch 1, **gekennzeichnet durch** die Verwendung für Schiebedächer, Schiebehebedächer, Fensterheber-, Sitzverstellsysteme oder dergleichen in einem Kraftfahrzeug.

8. Verfahren nach Anspruch 7, **dadurch gekennzeichnet, daß** die für die Normierung anfahrbare Endposition (18, 20) die geöffnete Hebelage eines Schiebehebedaches ist.

9. Vorrichtung zum Positionieren eines Teils (16), das mittels eines Antriebes (12) zwischen zwei Endpositionen (18, 20) hin- und herbewegbar ist und wobei für eine vorgegebene Anzahl (Z) von Annäherungen an eine der Endpositionen (18, 20) der Antrieb (12) vor dem Erreichen dieser Endposition (18, 20) gestoppt und gegebenenfalls dessen Drehrichtung geändert wird und bei einer anschließenden Annäherung an die Endposition (18, 20) diese zwecks Normierung erreicht, erfaßt und gespeichert wird, insbesondere nach einem Verfahren gemäß Anspruch 1, **dadurch gekennzeichnet, daß** die vorgegebene Anzahl eine durch eine Steuereinheit (10) erzeugte Zufallszahl (Z) ist.

## Claims

1. Method for positioning a part (16) which can be moved to and fro between two end positions (18, 20) by means of a drive (12), and in which, for a predefined number (Z) of approaches to one of the end positions (18, 20), the drive (12) is stopped before this end position (18, 20) is reached and, if appropriate, its direction of rotation is changed, and, during a subsequent approach to the end position (18, 20), the latter is reached for the purpose of standardization, sensed and stored, **characterized in that** the predefined number is generated as a random number (Z) in a control unit (10).

2. Method according to Claim 1, **characterized in that** only random numbers (Z) are selected within predefined limiting values (Zmin, Zmax).

3. Method according to Claim 1, **characterized in that**, during a first approach to this end position (18, 20), the part (16) is moved into the end position (18, 20) for standardization.

4. Method according to Claim 1, **characterized in that** the random number (Z) which is generated by the control unit (10) is decremented at each approach of the part (16) to the end position (18, 20) or stop position (18', 20').

5. Method according to Claim 4, **characterized in that**, when the random number zero is reached, the part (16) is standardized by moving it to its end position (18, 20).

6. Method according to Claim 1, **characterized in that**, during standardization, a position counter (26) for sensing the position of the part (16) is set to a predefined value, for example zero.

7. Method according to Claim 1, **characterized by** the use for sliding sunroofs, tilt and slide sunroofs, window lifting systems, seat adjustment systems or the like in a motor vehicle.

8. Method according to Claim 7, **characterized in that** the end position (18, 20) which can be approached for the standardization operation is the opened lifting position of a tilt and slide sunroof.

9. Device for positioning a part (16) which can be moved to and fro between two end positions (18, 20) by means of a drive (12), and in which, for a predefined number (Z) of approaches to one of the end positions (18, 20), the drive (12) is stopped before this end position (18, 20) is reached and, if appropriate its direction of rotation is changed, and, during a subsequent approach to the end position (18, 20), the latter is reached for the purpose of standardization, sensed and stored, in particular in accordance with the method according to Claim 1, **characterized in that** the predefined number is a random number (Z) generated by a control unit (10).

## Revendications

1. Procédé de positionnement dune pièce (16) déplacée en va et vient par un moyen d'entraînement (12) entre deux positions de fin de course (18, 20), selon lequel pour un nombre prédéterminé Z de rapprochements à l'une des positions de fin de course (18, 20), l'entraînement (12) est arrêté avant d'atteindre cette position de fin de course (18, 20) avec, le cas échéant, inversion de son sens de rotation, et au cours d'un rapprochement consécutif vers la position de fin de course (18, 20), celle-ci est atteinte, détectée et mémorisée pour une normalisation,
**caractérisé en ce qu'**
on génère le nombre prédéterminé dans une unité de commande (10) sous la forme d'un nombre aléatoire (Z).

2. Procédé selon la revendication 1,
**caractérisé en ce qu'**
on choisit des nombres aléatoires (Z) uniquement à l'intérieur de valeurs limites prédéterminées (Zmin, Zmax).

3. Procédé selon la revendication 1,
**caractérisé en ce que**
lors d'un premier rapprochement à cette position de fin de course (18, 20), on amène la pièce (16) dans cette position de fin de course (18, 20) pour une normalisation.

4. Procédé selon la revendication 1,
**caractérisé en ce que**
le nombre aléatoire (Z) généré par l'unité de commande (10) est décrémenté chaque fois que la pièce (16) se rapproche de la position de fin de course (18, 20) ou de la position d'arrêt (18', 20').

5. Procédé selon la revendication 4,
**caractérisé en ce que**
lorsque l'on atteint le nombre aléatoire 0, on normalise la pièce (16) en la faisant passer dans sa position de fin de course (18, 20).

6. Procédé selon la revendication 1,
**caractérisé en ce que**
pour normaliser, on met un compteur de position (26) détectant la position de la pièce (16) à une valeur prédéterminée, par exemple 0.

7. Procédé selon la revendication 1,
**caractérisé par**
son application à des toits coulissants, des toits coulissants relevables, des lève-vitres, des systèmes de réglage de siège ou analogues équipant un véhicule automobile.

8. Procédé selon la revendication 7,
**caractérisé en ce que**
la position de fin de course (18, 20) dans laquelle on passe pour normaliser est la position de relevage ouverte d'un toit coulissant et relevable.

9. Dispositif de positionnement d'une pièce (16) qui peut être déplacée en va et vient par un entraînement (12) entre deux positions de fin de course (18, 20), dans lequel pour un nombre prédéterminé (Z) de rapprochements à l'une des positions de fin de course (18, 20), l'entraînement (12) est arrêté avant d'atteindre cette position de fin de course (18, 20) avec, le cas échéant, inversion du sens de rotation, et lors d'un rapprochement suivant de la position de fin de course (18, 20), on atteint celle-ci, on la détecte et on la mémorise pour normaliser, notamment selon le procédé de la revendication 1,
**caractérisé en ce que**
le nombre prédéterminé est un nombre aléatoire (Z) donné par l'unité de commande (10).
